# EUROPÄISCHE PATENTANMELDUNG

(11) **EP 0 852 987 A1**
(43) Veröffentlichungstag der Anmeldung: **15.07.1998**
(21) Anmeldenummer: 97810929.6
(22) Anmeldetag: 01.12.1997
(51) Int. Cl.: B23K 11/36

(54) **Rollenkopf für eine Widerstand-Rollennahtschweissmaschine**

(30) Priorität: 13.01.1997 CH 48/97
(71) Anmelder: Frei, Siegfried, 9053 Teufen (CH)
(72) Erfinder: Frei, Siegfried, 9053 Teufen (CH)
(74) Vertreter: Gachnang, Hans Rudolf

(57) **Zusammenfassung**

Der Rollenkopf (1) umfasst zwei stillstehende Teile (3) mit Achsstummeln (7), welche durch eine Distanzhülse (19) miteinander verbunden sind. Der drehende Teil (5) wird von an den Achsstummeln (7) angebrachten Wälzlager (15) aufnehmende Flanschen (11) getragen. Die Stromübertragung erfolgt durch Übertragungsringe (17), die mit Federn (43) gleichzeitig an den drehenden Teil (5) und an den stillstehenden Teil (3) angepresst werden. Mit einer einzigen Zugschraube (23) und einem einzigen O-Ring (31), der zudem keine Drehdichtung zu übernehmen hat, werden die Kanäle für das Kühlwasser abgedichtet.

## Beschreibung

Gegenstand der Erfindung ist ein Rollenkopf für eine Widerstand-Rollennahtschweissmaschine gemäss Oberbegriff des Patentanspruches 1.

Rollenköpfe der genannten Gattung werden an Widerstand-Rollennahtschweissmaschinen eingebaut, die vorwiegend für die Fabrikation von Dosen- oder Gebinderümpfen eingesetzt werden. Bei Dosen für den Getränke- und Lebensmittelbereich ist der Einsatz von Rollenköpfen, bei denen die Stromübertragung vom feststehenden Stator- zum drehenden Rotorteil durch flüssige Übertragungsmittel, z.B. Quecksilber, erfolgt, nicht mehr erwünscht und in vielen Ländern verboten. Aus diesem Grunde sind in der letzten Zeit Rollenköpfe entwickelt worden, die ohne flüssige Übertragungsmittel auskommen. Ein solcher Rollenkopf ist beispielsweise in der EP-A1 0503292 offenbart. Bei diesem Rollenkopf wird die Übertragung des elektrischen Stroms vom stillstehenden zum beweglichen Teil über ein Kupfergitter geleitet, das am einen Teil festgeschraubt und am andern Teil unter Zwischenschaltung eines Metallringes reibend gleitet. Der Aufbau eines solchen Rollenkopfes ist aufwendig und folglich seine Herstellung und Wartung teuer.

Aufgabe der vorliegenden Erfindung ist die Schaffung eines kostengünstig herstellbaren Rollenkopfes mit wenig Einzelteilen und folglich niedrigen Herstellungskosten.

Gelöst wird diese Aufgabe durch einen Rollenkopf gemäss den Merkmalen des Patentanspruches 1.

Überraschenderweise gelingt es einwandfrei, eine verlustarme Stromübertragung vom feststehenden zum drehenden Teil mittels eines Kohlenstoff enthaltenden Ringes zu bewerkstelligen. Die natürlichen Schmiereigenschaften von Kohlenstoff bewirken nicht nur eine geringe Reibung und folglich geringe Erwärmung, sondern auch eine geringe Abnutzung und damit hohe Lebensdauer des Rollenkopfs. Im weiteren ermöglichen die Eigenschaften des vorzugsweise Kohlenstoff enthaltenden Übertragungsringes, dass das für die Kühlung notwendige Kühlwasser direkt im Bereich der Stromübertragung innerhalb des Rollenkopfs geführt werden kann. Dadurch ist es möglich, den Rollenkopf mit einer einzigen und erst noch statisch wirkenden Dichtung gegen den Austritt von Kühlwasser abzudichten. Bei herkömmlichen Rollenköpfen, wie sie beispielsweise in der genannten EP-A1 0503292 beschrieben sind, sind allein für die Abdichtung des Kühlwassers sechs Dichtungen notwendig. Die Möglichkeit eines Lecks in einer der Dichtungen ist folglich wesentlich höher. Im weiteren lässt sich der erfindungsgemässe Rollenkopf dank des einfachen Aufbaus auf einfache und kostengünstige Weise zusammensetzen und für Revisionen mit einer einzigen Schraube öffnen.

Anhand eines illustrierten Ausführungsbeispieles wird die Erfindung näher erläutert. Es zeigen:
- Figur 1: einen Längsschnitt durch einen Rollenkopf,
- Figur 2: einen Querschnitt längs Linie I-I in Figur 1 und
- Figur 3: einen Teilquerschnitt durch einen Rollenkopf, der seitlich des Lagers angeordnet ist.

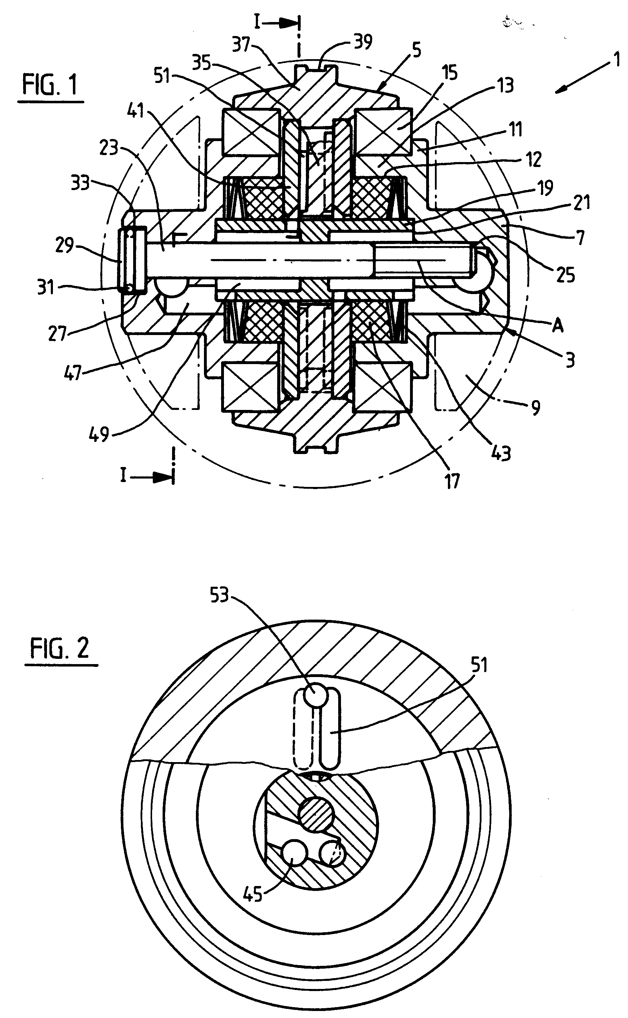

Der in Figur 1 dargestellte Rollenkopf 1 weist einen stillstehenden Teil 3 und einen drehenden Teil 5 auf. Der stillstehende Teil 3 umfasst zwei seitlich des Rollenkopfs 1 abstehende Lagerzapfen 7, welche dazu ausgebildet sind, in entsprechende Bohrungen an einem Schweissarm 9 einer herkömmlichen Schweissmaschine (nicht dargestellt) eingesetzt und festgehalten zu werden. An die Lagerzapfen 7 schliessen als Teil derselben Flanschen 11 an, welche gegen das Zentrum des Rollenkopfs 1 gerichtete zylindermantelförmige Absätze 13 tragen. Jeder zylindermantelförmige Absatz 13 trägt auf der äusseren Peripherie ein Wälzlager 15 und stützt an der Innenfläche (Kontaktfläche) einen Übertragungsring 17. Die beiden einander axial gegenüberliegenden stillstehenden Teile 3 sind durch eine Distanzhülse 19, deren Stirnflächen an einem umlaufenden Absatz 21 an den Achsstummeln 7 abgestützt sind, und einer Zugschraube 23 zusammengehalten. Die Zugschraube 23 kämmt in einem Gewinde 25, welches im ersten stillstehenden Teil 3 (rechte Seite) ausgebildet ist. Im zweiten stillstehenden Teil 3 (linke Seite) kann eine Bohrungserweiterung 27 vorgesehen sein, welche den Kopf 29 der Schraube 23 aufnimmt. Im Bereich des Kopfes 29 der Schraube 23, beispielsweise auf der Peripherie des Kopfes 29, kann ein Dichtungsring (O-Ring) 31 in einer Nut 33 eingesetzt sein. Der Dichtungsring 31 dient dazu, im Rollenkopf 1 vorgesehene Kühlwasser führende Kanäle gegen aussen abzudichten.

Der drehende Teil 5 umfasst eine kreisringförmige Scheibe 35 auf deren Peripherie ein reifenförmiger Ring 37 sitzt oder ausgebildet ist. Auf der Peripherie des Ringes 37 kann eine Nut 39 zur Aufnahme einer drahtförmigen Zwischenelektrode angebracht sein. An den beiden die Scheibe 35 seitlich überragenden Abschnitten des Ringes 37 sind auf den Innenseiten die Aussenkäfigringe der beiden Wälzlager 15 abgestützt. Der drehende Teil 5 ist somit via die beiden Wälzlager 15 mit den beiden stehenden Teilen 3 um die Drehachse A drehbar verbunden. Die Wälzlager 15 weisen integrierte Dichtungen gegen den axialen Durchtritt von Wasser auf. Auf den beiden Stirnflächen der kreisringförmigen Scheibe 35 sind Kontaktscheiben 41 befestigt, z.B. aufgelötet, auf deren Stirnflächen die Übertragungsringe 17 axial stromübertragend anliegen. Die Anpresskraft der Übertragungsringe 17 an die Kontaktscheiben 41 wird durch Federpakete 43 eingestellt. Die Federpakete 43 sind rückseitig an den Flanschen 11 abgestützt und pressen die Übertragungsringe 17 aber nicht nur axial gegen die Kontaktscheiben 41, sondern gleichzeitig auch radial gegen die innere Peripherie der zylindermantelförmigen Absätze 13 an den stehenden Teilen 3. Um diese axial wirkende Kraft der Federpakete 43 nicht nur axial wirkend an die Übertragungsringe 17 zu übertragen, sind die nach aussen gerichteten Flächen der Übertragungsringe 17 konisch ausgebildet. Zugleich können die Übertragungsringe 17 einen Schlitz aufweisen, der ein Spreizen und damit eine Durchmesservergrösserung erlaubt, oder die Übertragungsringe 17 sind aus mehreren Segmenten zusammengesetzt.

Für die Kühlung der bei einer Stromübertragung unvermeidbaren Wärmeentwicklung innerhalb des Rollenkopfes 1 sowie die Wärmeentwicklung am Ring 37, welcher in direkter oder indirekter Anlage mit einem zu schweissenden Werkstück steht und durch die heisse Schweissnaht verursacht wird, wird durch mindestens einen der beiden Achsstummel 7 Kühlwasser zugeführt. In der Schnittdarstellung gemäss Figur 2 ist ersichtlich, dass die Zuführung des Kühlwassers aus dem Schweissarm 9 durch eine Bohrung 45 zu einer parallel zur Achse A liegenden zweiten Bohrung 47 erfolgt. Von der zweiten Bohrung 47 kann das Wasser über einen ringförmigen Zwischenraum 49 zwischen der Distanzhülse 19 und der Zugschraube 23 in radial verlaufende Bohrungen 51 zwischen den Kontaktscheiben 41 und oder in der kreisringförmigen Scheibe 35 fliessen. Durch eine an die radialen Bohrungen 51 anschliessende Verbindungsbohrung 53 fliesst das Wasser zurück in die erste Bohrung im zweiten stillstehenden Teil 3 und von dort zurück in den ersten stillstehenden Teil auf der linken Seite zum Schweissarm 9 und in diesem zu einem Kühlaggregat.

Das im Innern des Rollenkopfs 1 zirkulierende Wasser ist gegenüber den beiden Übertragungsringen 17 nicht abgedichtet; es kann sich also auch in den Raum ergiessen, in dem die beiden Übertragungsringe 17 angeordnet sind. Es findet folglich nicht nur eine einseitige Kühlung der Kontaktscheiben 41 bzw. des zylindermantelförmigen Absatzes 13 am Flansch 11 statt, sondern eine beidseitige.

Die Montage des Rollenkopfes 1 und dessen Demontage zu Wartungszwecken erfolgt durch Lösen der einzigen Schraube 23. Sobald die Verbindung der Schraube 23 mit dem stillstehenden Teil 3 bzw. dem Achsstummel 7 auf der rechten Seite in Figur 1 gelöst ist, können die beiden Achsstummel 7 axial nach aussen geführt und dadurch der drehende Teil 5 vollständig freigelegt werden. Ebenfalls freigelegt werden dadurch die beiden Wälzlager 15, die beiden Kontaktscheiben 41 und die Übertragungsringe 17. Der drehende Teil 5 ist üblicherweise dem grössten Verschleiss ausgesetzt und kann revidiert oder durch einen anderen ersetzt werden. Die Kosten für den drehenden Teil sind gering, da dieser aus einem einfachen, preiswert herstellbaren Drehteil besteht, an dem die beiden Kontaktscheiben 41 gut stromleitend befestigt, z.B. angelötet, oder aber selbst ausgebildet sind. Die beiden ebenfalls einem geringen Verschleiss unterworfenen Übertragungsringe 17 können vor dem erneuten Zusammenschieben der einzelnen Teile nach dem Wechseln oder Überarbeiten des drehenden Teiles ebenfalls kostengünstig erneuert werden.

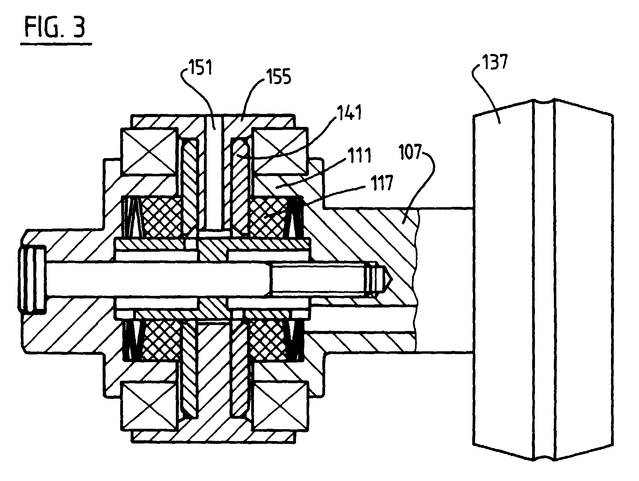

Alternativ kann selbstverständlich der im beschriebenen Beispiel der in Figur 1 drehende Teil 5 feststehend und mit Wasserzuführungen versehen sein. Die mit dem Werkstück in Kontakt gelangende Schweissrolle 137 ist in diesem Fall auf dem inneren Teil 3 (bisher feststehend) aufgesetzt (vgl. Figur 3).

Am im ersten Beispiel als Achsstummel 7 dienenden Teil 107 ist die Schweissrolle 137 fliegend gelagert. Der bisher die Kontaktfläche bildende Ring 37 ist im zweiten Ausführungsbeispiel als äusseres Gehäuse 155 ausgebildet, an welchem die Lagerung für den Rollenkopf 137 mit der Maschine verbunden wird. Der Zutritt des Kühlwassers erfolgt nun nicht mehr axial, sondern durch eine oder mehrere der radial verlaufenden Bohrungen 151.

Die Übertragung des Stromes vom nun feststehenden Teil (Gehäuse 155) zu den drehenden Teilen (107 und 137) erfolgt wiederum und analog zum ersten Ausführungsbeispiel über den Übertragungsring 117, der zum einen in Kontakt steht mit den Kontaktscheiben 141 und den zylindermantelförmigen Absäztzen.

## Patentansprüche

1. Rollenkopf für eine Widerstand-Rollennahtschweissmaschine, mit einem stillstehenden Teil und einem drehenden Teil, welche beiden Teile durch ein Kontaktelement stromleitend miteinander verbunden sind, und mit zwei Drehlagern, welche eine Drehbewegung des drehbaren Teils bezüglich dem stillstehenden Teil ermöglichen, dadurch gekennzeichnet, dass der stillstehende Teil (3) zwei durch eine Zugschraube (23) miteinander verbundene Achsstummel (7) umfasst, welche Achsstummel (7) kreisringförmige Flanschen (11) mit einer Kontaktfläche (12) tragen, und dass der drehende Teil (5), abgestützt durch die Lager (15), auf den Flanschen (11) drehbar gehalten ist und mindestens eine kreisringförmige Scheibe (35) umfasst, die in schleifender Verbindung mit Übertragungsringen (17) steht, welche eine elektrisch leitende Verbindung zum stillstehenden Teil (3) herstellen.

2. Rollenkopf nach Anspruch 1, dadurch gekennzeichnet, dass die beiden Achsstummel (7) durch eine Distanzhülse (19) gegenseitig beabstandet sind und durch die Zugschraube (23) zusammengehalten werden.

3. Rollenkopf nach einem der Ansprüche 1 oder 2, dadurch gekennzeichnet, dass an den Flanschen (11) zylindermantelförmige Kontaktflächen (12) ausgebildet sind.

4. Rollenkopf nach einem der Ansprüche 1 bis 3, dadurch gekennzeichnet, dass eine einzige, koaxial eingesetzte Zugschraube (23) die stillstehenden und die drehenden Komponenten zusammenhält.

5. Rollenkopf nach einem der Ansprüche 1 bis 4, dadurch gekennzeichnet, dass die Kontaktfläche (12) auf einem zylindermantelförmigen Absatz (13) ausgebildet sind.

6. Rollenkopf nach Anspruch 5, dadurch gekennzeichnet, dass die Lager (15) auf der Aussenfläche der zylindermantelförmigen Absätze (13) abgestützt sind.

7. Rollenkopf nach einem der Ansprüche 1 bis 6, dadurch gekennzeichnet, dass auf der Scheibe (35) Kontaktscheiben (41) aufgesetzt oder aufgelötet sind.

8. Rollenkopf nach einem der Ansprüche 1 bis 7, dadurch gekennzeichnet, dass die Übertragungsringe (17) durch eine Feder oder ein Federpaket (43) axial in Richtung auf die Scheibe (35) gepresst werden.

9. Rollenkopf nach Anspruch 8, dadurch gekennzeichnet, dass die Übertragungsringe (17) an einer Stelle geschlitzt oder aus mehreren Segmenten zusammengesetzt sind und/oder dass die Übertragungsringe (17) durch die Federn (43) radial nach aussen gegen die innere Mantel- oder Kontaktfläche (12) der Absätze (13) und an die Kontaktscheiben (41) gepresst werden.

10. Rollenkopf nach einem der Ansprüche 1 bis 9, dadurch gekennzeichnet, dass die Übertragungsringe (17) aus einem Kohlenstoff enthaltenden Material oder aus Metall bestehen.
